# EUROPEAN PATENT APPLICATION

(11) **EP 2 611 014 A1**
(43) Date of publication of application: **03.07.2013**
(21) Application number: 12183681.1
(22) Date of filing: 10.09.2012
(51) Int. Cl.: H02M 1/42, H02M 3/156

(54) **Self-oscillating power factor correction circuit**

(30) Priority: 28.12.2011 JP 2011287727
(71) Applicant: Toshiba Lighting & Technology Corporation, Yokosuka-shi Kanagawa 237-8510 (JP)
(72) Inventor: Kitamura, Noriyuki, Kanagawa, 237-8510 (JP); Takahashi, Yuji, Kanagawa, 237-8510 (JP); Otake, Hirokazu, Kanagawa, 237-8510 (JP)
(74) Representative: Bokinge, Ole

(57) **Abstract**

A power factor control circuit (3, 3a, 3b) of an embodiment includes an inductor (12), a switching element (5, 5a), a constant current element (6, 6a), a feedback coil (16), and a control circuit (17, 17a). The switching element (5, 5a) is connected to one end of the inductor (12) in series, performs a switching operation of repeating an on-state and an off-state when an input voltage which is input to the other end of the inductor is relatively high, continues the on-state when the input voltage is relatively low, and causes an input current to flow through the inductor (12). The constant current element (6, 6a) is connected to the switching element (5, 5a) in series and limits the current of the switching element (5, 5a). The feedback coil (16) is magnetically coupled to the inductor (12), supplies a voltage to a control terminal of the switching element (5, 5a), and controls the switching element (5, 5a). The control circuit (17, 17a) controls a constant current value of the constant current element (6, 6a) depending on the input voltage.

## Description

### FIELD

Embodiments described herein relate generally to a power factor control circuit and a power source device.

### BACKGROUND

In an electric apparatus, a direct current voltage generated from a single-phase alternating current which is input from a commercial power source or the like is used as a power source. Furthermore, recently, along with demand for electric power saving and miniaturization, a switching power source such as a DC-DC converter has been used. For this reason, problems may occur such as a decline in power factor and a generation of harmonics due to an increase in a peak current.

A power factor control circuit is a circuit which reduces the peak current by a current waveform approaching a voltage waveform, and, for example, uses a voltage-rising chopper circuit or a chopper circuit in which the current is controlled with reference to an input alternating voltage and an output voltage.

However, in the chopper circuit, an oscillatory frequency becomes higher in a light load, the electric power consumption is increased, and the electric power efficiency is lowered. Furthermore, when the oscillatory frequency becomes higher and an overcharged state occurs, the chopper circuit intermittently oscillates, and an idle period occurs.

### DESCRIPTION OF THE DRAWINGS

Fig. 1 is a circuit diagram that shows a power source device including a power factor control circuit according to a first embodiment.
Figs. 2A to 2D are waveform diagrams that show current waveforms of a switching element.
Fig. 3 is a waveform diagram of major signals of the power factor control circuit.
Fig. 4 is a circuit diagram that shows a power source device including a power factor control circuit according to a second embodiment.
Fig. 5 is a circuit diagram that shows a power source device including a power factor control circuit according to a third embodiment.

### DETAILED DESCRIPTION

In general, according to one embodiment, a power factor control circuit includes an inductor, a switching element, a constant current element, a feedback coil, and a control circuit. The switching element is connected to one end of the inductor in series. The switching element performs a switching operation of repeating an on-state and an off-state when an input voltage which is input to the other end of the inductor is relatively high, and continues the on-state and causes an input current to flow through the inductor when the input voltage is relatively low. The constant current element is connected to the switching element in series, and limits the current of the switching element. The feedback coil is magnetically coupled to the inductor, supplies a voltage to a control terminal of the switching element, and controls the switching element. The control circuit controls a constant current value of the constant current element depending on the input voltage.

Hereinafter, embodiments will be described in detail with reference to the drawings. In addition, in the description and respective drawings, in regard to the drawings previously mentioned, the same elements as those described above are denoted by the same reference numerals, and the detailed description thereof will be suitably omitted.

Firstly, a first embodiment will be described.

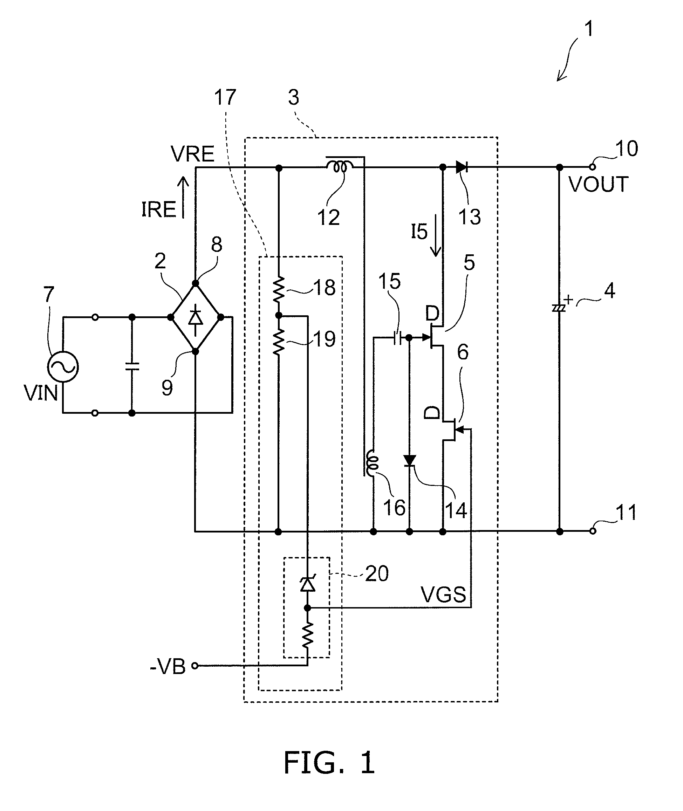

Fig. 1 is a circuit diagram which shows a power source device including a power factor control circuit according to a first embodiment.

As shown in Fig. 1, a power source device 1 includes a rectifying circuit 2, a power factor control circuit 3, and a smoothing capacitor 4 that is charged by the power factor control circuit 3.

The rectifying circuit 2 is constituted by a diode bridge, rectifies an alternating current voltage VIN of an alternating current power source 7, and outputs an undulating voltage VRE between a high-potential terminal 8 and a low-potential terminal 9. In addition, the rectifying circuit 2 may rectify the alternating current voltage VIN and may have other configurations. Furthermore, a capacitor, which reduces noise, is connected to an input side of the rectifying circuit 2.

The power factor control circuit 3 has a switching element 5, a constant current element 6 connected to the switching element 5 in series, an inductor 12, a diode 13, a protective diode 14, a coupling capacitor 15, a feedback coil 16, and a control circuit 17.

The switching element 5 is, for example, a field effect transistor (FET), and is, for example, a high electron mobility transistor (HEMT). The switching element 5 is a normally-on type element. The switching element 5 is connected to one end of the inductor 12 in series, and the undulating voltage VRE is input to the other end of the inductor 12. That is, a drain of the switching element 5 is connected to the high-potential terminal 8 of the rectifying circuit 2 via the inductor 12. A source of the switching element 5 is connected to a drain of the constant current element 6. A gate of the switching element 5 (control terminal of the switching element) is connected to one end of the feedback coil 16 via the coupling capacitor 15. Furthermore, the protective diode 14 is connected to the gate of the switching element 5.

The constant current element 6 is, for example, the FET, and is, for example, the HEMT. The constant current element 6 is the normally-on type element. A source of the constant current element 6 is connected to the low-potential terminal 9 of the rectifying circuit 2, and a gate of the constant current element 6 (control terminal of the constant current element) is connected to the control circuit 17. A control voltage VGS is supplied from the control circuit 17 to the gate of the constant current element 6. A constant current value of the constant current element 6 is controlled by the control voltage VGS.

The other end of the feedback coil 16 is connected to the low-potential terminal 9 of the rectifying circuit 2. The feedback coil 16 is connected to the inductor 12 with polarity that a voltage of positive polarity is supplied to the gate side of the switching element 5 when the electric current increasing in the direction of the drain of the switching element 5 flows from the high-potential terminal 8.

An anode of the diode 13 is connected to the drain of the switching element 5 and is connected to the high-potential terminal 8 of the rectifying circuit 2 via the inductor 12. A cathode of the diode 13 is connected to one end (the positive pole side) of the smoothing capacitor 4.

The other end (the negative pole side) of the smoothing capacitor 4 is connected to the low-potential terminal 9 of the rectifying circuit 2. The voltages of the both ends of the smoothing capacitor 4 are output as an output voltage of the power factor control circuit 3. That is, the one end of the smoothing capacitor 4 is connected to a high-potential output terminal 10, and the other end of the smoothing capacitor 4 is connected to a low-potential output terminal 11.

The control circuit 17 has dividing resistances 18 and 19 and a level shifter 20.

The dividing resistances 18 and 19 are connected between the high-potential terminal 8 and the low-potential terminal 9 of the rectifying circuit 2 in series and divide the undulating voltage VRE that is input to the power factor control circuit 3. In addition, respective resistance values of the dividing resistances 18 and 19 are sufficiently great, and the current flowing through the dividing resistances 18 and 19 is sufficiently lower than a current IRE that is input to the power factor control circuit 3.

The level shifter 20 shifts the level of the undulating voltage VRE divided by the dividing resistances 18 and 19 to the negative polarity side, and outputs the undulating voltage VRE as the control voltage VGS. The level shifter 20 is constituted by a zener diode, and a resistance biased by a negative voltage -VB. In addition, the level shifter 20 may shift the level of the voltage divided by the dividing resistances 18 and 19 to the negative polarity side, and may have other configurations.

Next, an operation of the power source device 1 including the power factor control circuit 3 will be described.

The rectifying circuit 2 outputs the undulating voltage VRE which rectifies the alternating current voltage VIN which is supplied from the alternating current power source 7. Thus, the undulating voltage VRE which is output from the rectifying circuit 2 is a voltage in which a value thereof is changed together with time.

As mentioned above, the control circuit 17 of the power factor control circuit 3 generates the control voltage VGS which shifts the level of the voltage proportional to the undulating voltage VRE which is input to the power factor control circuit 3 to the negative polarity side. Furthermore, the control circuit 17 supplies the control voltage VGS to the gate of the constant current element 6, and controls the constant current value of the constant current element 6.

That is, when the undulating voltage VRE is relatively high, the constant current value of the constant current element 6 is controlled to a relatively high level, and when the undulating voltage VRE is relatively low, the constant current value of the constant current element 6 is controlled to a relatively low level. In addition, since the constant current element 6 is the normally-on type element, the level of the control voltage VGS is shifted to the negative polarity side.

When an instantaneous value of the undulating voltage VRE which is input to the power factor control circuit 3 is relatively low, that is, is lower than a second voltage, a value of the current IRE flowing through the inductor 12 is low, and a voltage induced to the feedback coil 16 magnetically coupled to the inductor 12 is low. Furthermore, when the undulating voltage VRE is relatively low, since the control voltage VGS which is output from the control circuit 17 is relatively low, the constant current value of the constant current element 6 is controlled to a relatively small level. As a consequence, the switching element 5 which is supplied with the induced voltage from the feedback coil 16 to the gate thereof continues the on-state. The switching element 5 causes the direct current to flow from the rectifying circuit 2 via the inductor 12.

Furthermore, when the undulating voltage VRE is relatively high, that is, is equal to or greater than a first voltage that is higher than the second voltage, the current IRE flowing through the inductor 12 increases, and when a current I5 flowing through the switching element 5 exceeds the constant current value of the constant current element 6, the voltage between the drain and the source of the constant current element 6 suddenly rises. As a consequence, a negative voltage having an absolute value exceeding a threshold voltage is generated between the drain and the source of the switching element 5, the switching element 5 is turned off, and the current IRE flowing through the inductor 12 charges the smoothing capacitor 4 via the diode 13. At this time, the current IRE flowing through the inductor 12 decreases. Moreover, when the current IRE flowing through the inductor 12 becomes zero, the switching element 5 is turned on. As a consequence, the state feedbacks to a state where the current flowing through the inductor 12 increases, and the same operations are repeated. The switching element 5 performs a switching operation of repeating the on-state and the off-state and oscillates.

When the undulating voltage VRE is relatively high, since the control voltage VGS which is output from the control circuit 17 is relatively high, the constant current value of the constant current element 6 is controlled to a relatively great value. As a consequence, a peak value of the current IRE is changed depending on the undulating voltage VRE, and a waveform of an average value of the current IRE is similar to a waveform of the undulating voltage VRE.

Furthermore, between when the undulating voltage VRE is relatively low and when the undulating voltage VRE is relatively high, that is, when the undulating voltage VRE is equal to or greater than the second voltage and is lower than the first voltage, when the current I5 flowing through the switching element 5 is smaller than the constant current value of the constant current element 6, the switching element 5 does not enter the off-state. The current I5 of the switching element 5 continues the on-state and oscillates. The higher the undulating voltage VRE is, the greater the variation range of the current I5 is.

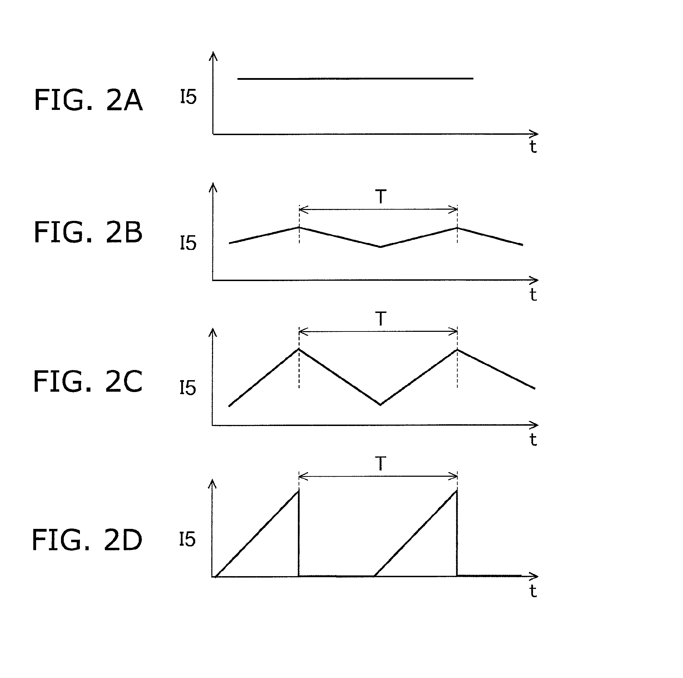

Figs. 2A to 2D are waveform diagrams that show current waveforms of the switching element.

The waveforms of the current I5 of the switching element 5 of a case, where the instantaneous value of the undulating voltage VRE increases in the sequence of Figs. 2A to 2D, are schematically shown.

As shown in Fig. 2A, when the instantaneous value of the undulating voltage VRE is relatively small, that is, smaller than the second voltage, the switching element 5 continues the on-state, and an approximately constant direct current limited by the constant current element 6 flows. In a state where the switching element 5 outputs the constant direct current, the power factor control circuit 3 performs the same operation as that of a low impedance element causing a constant current to flow.

As shown in Fig. 2B, when the instantaneous value of the undulating voltage VRE is increased, that is, equal to or greater than the second voltage, the current vibrates while the switching element 5 continues the on-state. Furthermore, as shown in Fig. 2C, when the instantaneous value of the undulating voltage VRE is further increased, the variation range of the current of the switching element 5 is increased depending on the instantaneous value of the undulating voltage VRE.

In this manner, when the instantaneous value of the undulating voltage VRE is increased, the switching element 5 enters an incompletely oscillating state, the current of the switching element 5 vibrates. However, when the instantaneous value of the undulating voltage VRE is smaller than a predetermined value (the first voltage), the switching element 5 does not enter the off-state, and continues the on-state. In addition, a peak value of the vibrating current of the switching element 5 becomes a value that is limited by the constant current value of the constant current element 6 controlled by the control circuit 17. Furthermore, a vibration period T of the switching element 5 is changed depending on the variation range of the current.

Moreover, as shown in Fig. 2D, when the instantaneous value of the undulating voltage VRE is equal to or greater than the predetermined value (the first value), the switching element 5 performs the switching operation of repeating the on-state and the off-state and oscillates. At this time, the power factor control circuit 3 is operated as a self-excitation type chopper circuit.

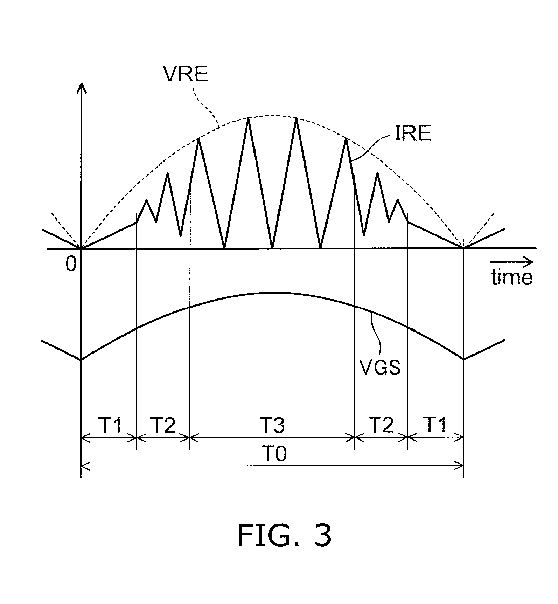

Fig. 3 is a waveform diagram of major signals of the power factor control circuit.

As shown in Fig. 3, the undulating voltage VRE which is output from the rectifying circuit 2 becomes a waveform which turns down the alternating voltage VIN of the alternating power source 7 to the positive polarity side. Furthermore, the resistance values of the dividing resistances 18 and 19 are sufficiently great, and the current IRE which is input to the power factor control circuit 3 flows through the inductor 12 nearly as is. The control voltage VGS is a voltage which shifts the level of the voltage proportional to the undulating voltage VRE to the negative polarity side.

As mentioned above, when the instantaneous value of the undulating voltage VRE which is input to the power factor control circuit 3 is relatively low (period T1 of Fig. 3), the switching element 5 continues the on-state. The switching element 5 causes the direct current as the input current IRE to flow via the inductor 12. At this time, the power factor control circuit 3 performs the operation of the low impedance element.

Furthermore, when the instantaneous value of the undulating voltage VRE which is input to the power factor control circuit 3 is relatively high and is lower than the predetermined value (period T2 of Fig. 3), while the switching element 5 continues the on-state, the current I5 flowing through the switching element 5 enters the vibrating state. Furthermore, the variation range of the current I5 is changed depending on the instantaneous value of the undulating voltage VRE, and when the undulating voltage VRE rises, the current I5 vibrates so that the variation range thereof is increased. As a consequence, the switching element 5 causes the current which does not become zero but vibrates to flow via the inductor 12 as the input current IRE.

Furthermore, when the instantaneous value of the undulating voltage VRE which is input to the power factor control circuit 3 is relatively high and is equal to or greater than the predetermined value (period T3 of Fig. 3), the switching element 5 performs the switching operation of repeating the on-state and the off-state and oscillates. As a consequence, the switching element 5 causes an oscillation current vibrating between zero and the peak value to flow as the input current IRE via the inductor 12. Furthermore, during the period when the input current IRE is reduced, the smoothing capacitor 4 is charged. At this time, the power factor control circuit 3 performs an operation of a current critical mode (CRM).

In this manner, in the present embodiment, when the undulating voltage VRE and the control voltage VGS are equal to or greater than the predetermined values, the switching element 5 performs the switching operation. When the undulating voltage VRE and the control voltage VGS are lower than the predetermined values, the switching element 5 performs the operation such as the low impedance element via a transient operation in which the current value vibrates while continuing the on-state.

Furthermore, the power factor control circuit 3 performs the operation of the current critical mode as the chopper circuit when the undulating voltage VRE and the control voltage VGS are equal to or greater than the predetermined values. When the undulating voltage VRE and the control voltage VGS are lower than the predetermined values, the power factor control circuit 3 performs the operation of the low impedance element via the transient operation.

The chopper circuit is a circuit of low power consumption and high efficiency for the switching element 5 to repeatedly perform the switching operation between the on-state having a low resistance and the off-state in which the current does not flow. In the present embodiment, when the instantaneous value of the undulating voltage VRE is equal to or greater than the predetermined value, the switching operation is performed, and when the instantaneous value of the undulating voltage VRE is small, the operation such as the low impedance element is performed. When the instantaneous value of the undulating voltage VRE is great, the product of the voltage and the current is great, and when performing the operation such as the low impedance element, the loss is increased, and a voltage rising operation cannot be performed. Thus, when the instantaneous value of the undulating voltage VRE is great, the switching operation is suitable for the reducing energy consumption. Furthermore, when the instantaneous value of the undulating voltage VRE is small, since the loss is small, there is no problem in the operation as the low impedance element.

Furthermore, in the present embodiment, since the control circuit 17 controls the control voltage VGS which is supplied to the gate of the constant current element 6 depending on the undulating voltage VRE, it is possible to continuously change between the switching operation and the low impedance operation depending on the undulating voltage VRE via the transient operation. That is, the power factor control circuit 3 can continuously change between the current critical mode and the operation of the low impedance element via the transient state depending on the undulating voltage VRE. As a consequence, in the present embodiment, even when the undulating voltage VRE is relatively low, an idle period generated in the case of the intermittent oscillation does not occur, the current IRE can be caused to continuously flow in all phases of the undulating voltage VRE, and thus the power factor is improved.

In addition, in regard to the time of the half period of the alternating current voltage VIN, that is, a time T0 between zero cross, the periods T1, T2 and T3 are changed by the setting of the value of the undulating voltage VRE, the winding ratio between the inductor 12 and the feedback coil 16, and the control voltage VGS.

Next, an effect of the present embodiment will be described.

In this manner, in the present embodiment, it is possible to continuously change between the current critical mode and the operation of the low impedance element via the transient state depending on the undulating voltage VRE. As a consequence, it is possible to cause the current to continuously flow in all phases of the undulating voltage VRE, and thus the power factor in the light load can be improved.

Furthermore, since the present embodiment is a self-excitation type, the circuit configuration is simple and the miniaturization is possible.

Next, a second embodiment will be described.

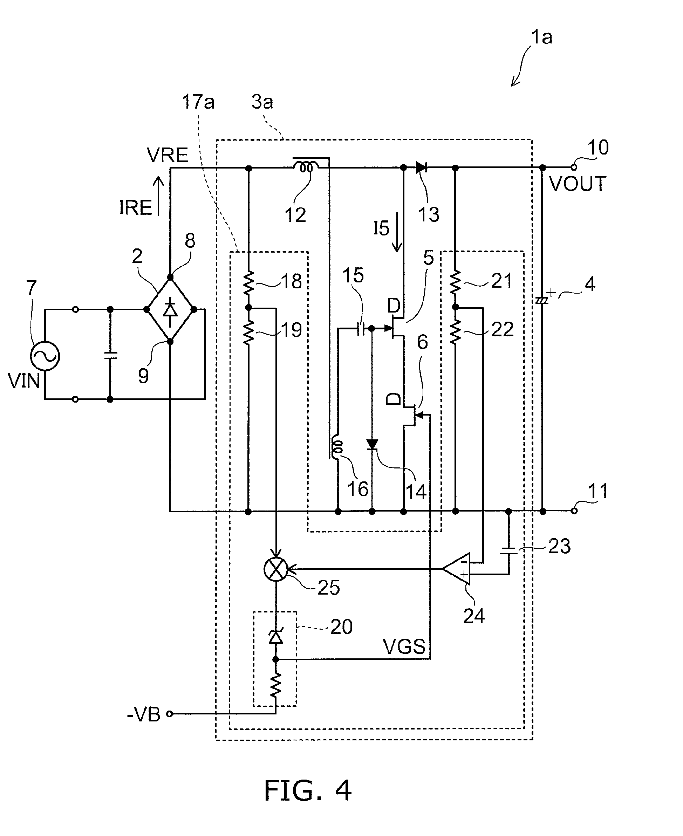

Fig. 4 is a circuit diagram that shows a power source device including a power factor control circuit according to the second embodiment.

As shown in Fig. 4, the second embodiment is different from the first embodiment in the configuration of the control circuit 17 of the power factor control circuit 3. That is, a power factor control circuit 3a includes the switching element 5, the constant current element 6, the inductor 12, the diode 13, the protective diode 14, the coupling capacitor 15, the feedback coil 16 and a control circuit 17a. Furthermore, a power source device 1a includes the rectifying circuit 2, the power factor control circuit 3a and the smoothing capacitor 4. The rectifying circuit 2 and the smoothing capacitor 4 are the same as those of the first embodiment.

The control circuit 17a is added with dividing resistances 21 and 22, a standard voltage generation circuit 23, an amplifier circuit 24, and a multiplication circuit 25 compared to the control circuit 17 in the first embodiment. The dividing resistances 18 and 19 and the level shifter 20 are the same as those of the control circuit 17 in the first embodiment.

The dividing resistances 21 and 22 are connected between the high-potential output terminal 10 and the low-potential output terminal 11 in series. The dividing resistances 21 and 22 divide an output voltage VOUT of the power factor control circuit 3a.

The amplifier circuit 24 amplifies a difference voltage between a standard voltage generated in the standard voltage generation circuit 23 and a voltage in which the output voltage VOUT is divided by the dividing resistances 21 and 22. The multiplication circuit 25 multiplies a voltage, which divides the input voltage VRE by the dividing resistances 18 and 19, by an output voltage of the amplifier circuit 24. The level shifter 20 level-shifts the multiplied output of the multiplication circuit 25 to the negative polarity side and outputs the level-shifted output as the control voltage VGS.

In the present embodiment, the control circuit 17a weighs a voltage dividing the undulating voltage VRE by an error voltage of the output voltage VOUT to generates the control voltage VGS. The control circuit 17a performs the control so that when the output voltage VOUT is relatively high, the control circuit 17a reduces the constant current value of the constant current element 6, and when the output voltage VOUT is relatively low, the control circuit 17a increases the constant current value of the constant current element 6. As a consequence, the output voltage VOUT is controlled so as to be a fixed value.

In the first embodiment, since the control circuit 17 does not feedback the output voltage VOUT, there is a possibility that the output voltage VOUT may rise. On the contrary, in the present embodiment, the output voltage VOUT can be constantly controlled.

Effects of the present embodiment other than the effects mentioned above are the same as those of the first embodiment.

Next, a third embodiment will be described.

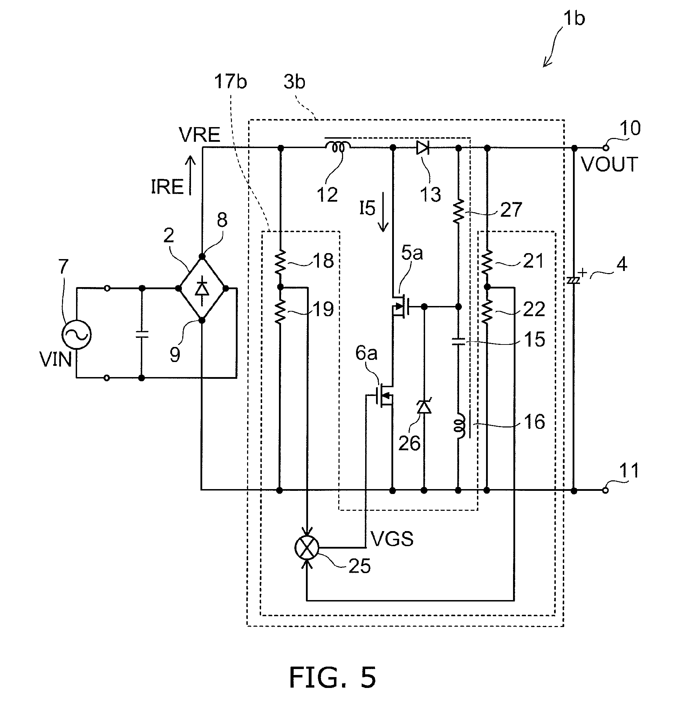

Fig. 5 is a circuit diagram that shows a power source device including a power factor control circuit according to the third embodiment.

As shown in Fig. 5, a power source device 1b includes the rectifying circuit 2, a power factor control circuit 3b, and the smoothing capacitor 4 charged by the power factor control circuit 3b. The rectifying circuit 2 and the smoothing capacitor 4 are the same as those of the first embodiment.

The power factor control circuit 3b according to the present embodiment is different from the power factor control circuit 3a according to the second embodiment in that the switching element 5 and the constant current element 6 are normally-off type elements. That is, the power factor control circuit 3b includes a switching element 5a, a constant current element 6a which is connected to the switching element 5a in series, the inductor 12, the diode 13, the coupling capacitor 15, the feedback coil 16, a control circuit 17b and a protective diode 26.

The switching element 5a is, for example, the field effect transistor (FET), and is, for example, the high electron mobility transistor (HEMT). The switching element 5a is the normally-off type element. The switching element 5a is connected to one end of the inductor 12 in series, and the undulating voltage VRE is input to the other end of the inductor 12. That is, a drain of the switching element 5a is connected to the high-potential terminal 8 of the rectifying circuit 2 via the inductor 12. A source of the switching element 5a is connected to a drain of the constant current element 6a. A gate of the switching element 5a (control terminal of the switching element) is connected to one end of the feedback coil 16 via the coupling capacitor 15. Furthermore, the protective diode 26 is connected to the gate of the switching element 5a.

The constant current element 6a is, for example, the FET, and is, for example, the HEMT. The constant current element 6a is the normally-off type element. A source of the constant current element 6a is connected to the low-potential terminal 9 of the rectifying circuit 2, and a gate of the constant current element 6 (control terminal of the constant current element) is connected to the control circuit 17b. The control voltage VGS is supplied from the control circuit 17b to the gate of the constant current element 6a. The constant current value of the constant current element 6a is controlled by the control voltage VGS.

The other end of the feedback coil 16 is connected to the low-potential terminal 9 of the rectifying circuit 2. The feedback coil 16 is connected in the polarity that the voltage of positive polarity is supplied to the gate side of the switching element 5a when the electric current increasing in the direction of the drain of the switching element 5a flows from the high-potential terminal 8 to the inductor 12.

An anode of the diode 13 is connected to the drain of the switching element 5a and is connected to the high-potential terminal 8 of the rectifying circuit 2 via the inductor 12. A cathode of the diode 13 is connected to an end (the positive pole side) of the smoothing capacitor 4 and is further connected to the gate of the switching element 5a via a resistance 27. The resistance 27 supplies bias voltages so that the normally-off type switching element 5a is turned on in a state where the voltage is not induced to the feedback coil 16.

The other end (the negative pole side) of the smoothing capacitor 4 is connected to the low-potential terminal 9 of the rectifying circuit 2. The voltages of the both ends of the smoothing capacitor 4 are output as an output voltage of the power factor control circuit 3b. That is, the one end of the smoothing capacitor 4 is connected to the high-potential output terminal 10, and the other end of the smoothing capacitor 4 is connected to the low-potential output terminal 11.

The control circuit 17b has the dividing resistances 18, 19, 21 and 22 and the multiplication circuit 25.

The dividing resistances 18 and 19 are connected between the high-potential terminal 8 and the low-potential terminal 9 of the rectifying circuit 2 in series and divide the undulating voltage VRE that is input to the power factor control circuit 3b. In addition, the respective resistance values of the dividing resistances 18 and 19 are sufficiently great, and the current flowing through the dividing resistances 18 and 19 is sufficiently lower than the current IRE that is input to the power factor control circuit 3b.

The dividing resistances 21 and 22 are connected between the high-potential output terminal 10 and the low-potential output terminal 11 in series. The dividing resistances 21 and 22 divide the output voltage VOUT of the power factor control circuit 3b.

The multiplication circuit 25 multiplies a voltage, obtained by dividing the input voltage VRE by the dividing resistances 18 and 19, by a voltage, obtained by dividing the output voltage VOUT by the dividing resistances 21 and 22. The multiplication circuit 25 outputs the control voltage VGS. The control voltage VGS is, for example, a voltage in which the control voltage VGS shown in Fig. 3 is level-shifted to the positive polarity side.

Next, an operation of the power source device 1b including the power factor control circuit 3b will be described.

As mentioned above, the rectifying circuit 2 outputs the undulating voltage VRE which rectifies the alternating current voltage VIN which is supplied from the alternating current power source 7.

Furthermore, the control circuit 17b generates the control voltage VGS which multiplies a voltage proportional to the undulating voltage VRE which is input to the power factor control circuit 3b by a voltage proportional to the output voltage VOUT. The control circuit 17b supplies the control voltage VGS to the gate of the constant current element 6a, and controls the constant current value of the constant current element 6a.

When the undulating voltage VRE is relatively high, the control circuit 17b controls the constant current value of the constant current element 6a to a relatively great level, and when the undulating voltage VRE is relatively low, the control circuit 17b controls the constant current value of the constant current element 6a to a relatively small level. In addition, since the constant current element 6a in the present embodiment is the normally-off type element, the voltage of the positive polarity is supplied as the control voltage VGS.

When an instantaneous value of the undulating voltage VRE which is input to the power factor control circuit 3b is relatively low, a value of the current IRE flowing through the inductor 12 is low, and a voltage induced to the feedback coil 16 magnetically coupled to the inductor 12 is low. Furthermore, when the undulating voltage VRE is relatively low, since the control voltage VGS which is output from the control circuit 17b is relatively low, the constant current value of the constant current element 6a is controlled to a relatively small level. As a consequence, the switching element 5a which is supplied with the induced voltage from the feedback coil 16 to the gate thereof continues the on-state. The switching element 5a causes the direct current to flow from the rectifying circuit 2 via the inductor 12.

Furthermore, when the undulating voltage VRE is relatively high, the current IRE flowing through the inductor 12 increases, and when the current I5 flowing through the switching element 5a exceeds the constant current value of the constant current element 6a, the voltage between the drain and the source of the constant current element 6a suddenly rises. As a consequence, the voltage between the gate and the source of the switching element 5a is lower than the threshold voltage, the switching element 5a is turned off, and the current IRE flowing through the inductor 12 charges the smoothing capacitor 4 via the diode 13. At this time, the current IRE flowing through the inductor 12 decreases. Moreover, when the current IRE flowing through the inductor 12 becomes zero, the switching element 5a is turned on. As a consequence, the state feedbacks to a state where the current flowing through the inductor 12 increases, and the same operations are repeated. The switching element 5a performs an operation of repeating the on-state and the off-state and oscillates.

When the undulating voltage VRE is relatively high, since the control voltage VGS which is output from the control circuit 17b is also relatively high, the constant current value of the constant current element 6a is controlled to a relatively great value. As a consequence, the peak value of the current IRE is changed depending on the undulating voltage VRE, and the waveform of the average value of the current IRE is similar to the waveform of the undulating voltage VRE.

Furthermore, between when the undulating voltage VRE is relatively low and when the undulating voltage VRE is relatively high, when the current I5 flowing through the switching element 5a is smaller than the constant current value of the constant current element 6a, the switching element 5a does not enter the off-state. The current I5 of the switching element 5a continues the on-state and vibrates. The higher the undulating voltage VRE is, the greater the variation range of the current I5 is.

In the present embodiment, the control circuit 17b weighs the voltage which divides the undulating voltage VRE by the voltage proportional to the output voltage VOUT to generates the control voltage VGS. The control circuit 17b performs the control so that when the output voltage VOUT is relatively high, the control circuit 17b reduces the constant current value of the constant current element 6a, and when the output voltage VOUT is relatively low, the control circuit 17b increases the constant current value of the constant current element 6a. As a consequence, the output voltage VOUT is controlled so as to be a fixed value.

In the embodiment, the normally-off type elements can be used as the switching element 5a and the constant current element 6a.

Effects of the present embodiment other than the effects mentioned above are the same as those of the second embodiment.

Although the embodiments were described with reference to the specific examples, various modifications are possible without being limited thereto.

For example, the switching element and the constant current element are not limited to a GaN-based HEMT. For example, a semiconductor device may be adopted which is formed using a semiconductor (a wide band gap semiconductor) having a wide band gap such as silicon carbide (SiC), gallium nitride (GaN) and a diamond on a semiconductor substrate. Herein, the wide band gap semiconductor is referred to as a semiconductor that has a band gap wider than gallium arsenide (GaAs) having a band gap of about 1.4 eV. For example, a semiconductor having the band gap of about 1.5 eV or more, gallium phosphide (GaP, the band gap is about 2.3 eV), gallium nitride (GaN, the band gap is about 3.4 eV), diamond (C, the band gap is about 5.27 eV), aluminum nitride (AlN, the band gap is about 5.9 eV), silicon carbide (SiC) or the like are included. Since such a wide band gap semiconductor element can be smaller than a silicon semiconductor element when the voltage-resistant is the same, the parasitic capacitance is small, since the high-speed operation is possible, the switching period can be shortened, and thus, the coil component, the capacitor or the like can be miniaturized.

Furthermore, the switching element and the constant current element are not limited to the normally-on type element or the normally-off type element. For example, the normally-on type switching element may be combined with the normally-off type constant current element, and the normally-off type switching element may be combined with the normally-on type constant current element.

Although some embodiments and examples were described, such embodiments and examples are shown as an example, and are not intended to limit the scope thereof. New embodiments and examples are able to be embodied by various other forms, and various omissions, replacements and modifications can be carried out without departing from the gist thereof. The embodiments, the examples and the modifications thereof are included in the scope and the gist thereof and are included in the inventions described in the claims and within the equivalent scope thereof.

## Claims

1. A power factor control circuit comprising:
an inductor (12);
a switching element (5, 5a) which is connected to one end of the inductor (12) in series, performs a switching operation of repeating an on-state and an off-state when an input voltage which is input to the other end of the inductor (12) is relatively high, continues the on-state when the input voltage is relatively low, and causes an input current to flow through the inductor;
a constant current element (6, 6a) which is connected to the switching element (5, 5a) in series and limits the current of the switching element (5, 5a);
a feedback coil (16) which is magnetically coupled to the inductor (12), supplies a voltage to a control terminal of the switching element (5, 5a), and controls the switching element (5, 5a); and
a control circuit (17, 17a) which controls a constant current value of the constant current element (6, 6a) depending on the input voltage.

2. The circuit according to claim 1,
wherein the current flowing through the switching element (5, 5a) vibrates so that a variation range of the current increases when the input voltage rises.

3. The circuit according to claim 1 or 2,
wherein the switching element (5, 5a) continues the on-state and causes a direct current to flow when the input voltage is relatively low.

4. The circuit according to any one of claims 1 to 3,
wherein the control circuit (17, 17a) decreases the constant current value of the constant current element (6, 6a) when an output voltage which is output from the one end of the inductor (12) is relatively high, and the control circuit increases the constant current value of the constant current element (6, 6a) when the output voltage is relatively low.

5. The circuit according to any one of claims 1 to 4,
wherein the control circuit (17a) controls the constant current value of the constant current element so that the output voltage which is output from the inductor (12) becomes constant.

6. The circuit according to any one of claims 1 to 5,
wherein the control circuit (17a) controls the constant current value of the constant current element (6, 6a) based on a voltage that multiplies the input voltage by the output voltage.

7. A power source device comprising:
a power factor control circuit (3, 3a, 3b) according to any one of claims 1 to 6;
a smoothing capacitor (4) charged by the power factor control circuit (3, 3a, 3b); and
a rectifying circuit (2) that rectifies an alternating current voltage and supplies the power factor control circuit (3, 3a, 3b) with an undulating voltage.
